# EUROPEAN PATENT SPECIFICATION

(11) **EP 3 606 228 B1**
(45) Date of publication and mention of the grant of the patent: **16.03.2022**
(21) Application number: 18772487.7
(22) Date of filing: 29.01.2018
(51) Int. Cl.: H04L 5/00, H04W 76/15, H04W 8/22, H04W 36/00, H04W 8/24

(54) **TERMINAL CAPABILITY NEGOTIATION METHOD, APPARATUS, AND STORAGE MEDIUM**
VERFAHREN ZUR VERHANDLUNG DER KAPAZITÄT EINES ENDGERÄTS, VORRICHTUNG UND SPEICHERMEDIUM
PROCÉDÉ DE NÉGOCIATION DE CAPACITÉ DE TERMINAL, APPAREIL ET SUPPORT D'INFORMATIONS

(30) Priority: 24.03.2017 CN 201710184570
(43) Date of publication of application: 05.02.2020
(73) Proprietor: ZTE Corporation, Shenzhen, Guangdong 518057 (CN)
(72) Inventor: YANG, Li, Shenzhen Guangdong 518057 (CN); HUANG, He, Shenzhen Guangdong 518057 (CN)
(74) Representative: Ricker, Mathias
(86) International application number: PCT/CN2018/074418
(87) International publication number: WO 2018/171334

(56) References cited:
- EP-A1- 3 031 266
- EP-A1- 3 117 682
- CN-A- 104 519 583
- CN-A- 106 304 411
- CN-A- 106 416 421
- ZTE: "UE Capability Coordination over XnAP and X2AP Due to NR-LTE Tight Interworking", 3GPP DRAFT; R3-170536 UE CAPABILITY COORDINATION OVER XNAP AND X2AP DUE TO NR-LTE TIGHT INTERWORKING V2, 3RD GENERATION PARTNERSHIP PROJECT (3GPP), MOBILE COMPETENCE CENTRE ; 650, ROUTE DES LUCIOLES ; , vol. RAN WG3, no. Athens, Greece; 20170213 - 20170217 7 February 2017 (2017-02-07), XP051224340, Retrieved from the Internet: URL:http://www.3gpp.org/ftp/tsg_ran/WG3_Iu /TSGR3_95/Docs/ [retrieved on 2017-02-07]
- ZTE ET AL: "Report of Email discussion 96-33 UE capability coordination", 3GPP DRAFT; R2-1700407 REPORT OF EMAIL DISCUSSION 96-33 UE CAPABILITY COORDINATION, 3RD GENERATION PARTNERSHIP PROJECT (3GPP), MOBILE COMPETENCE CENTRE ; 650, ROUTE DES LUCIOLES ; F-06921 SOPHIA-ANTIP , vol. TSG RAN, no. Spokane, USA; 20170117 - 20170119 17 January 2017 (2017-01-17), XP051210986, Retrieved from the Internet: URL:http://www.3gpp.org/ftp/Meetings_3GPP_ SYNC/RAN2/Docs/ [retrieved on 2017-01-17]
- "3rd Generation Partnership Project; Technical Specification Group Radio Access Network; Study on New Radio (NR) Access Technology (Release 14)", 3GPP STANDARD ; TECHNICAL SPECIFICATION ; 3GPP TR 38.912, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. V1.0.0, 16 March 2017 (2017-03-16), pages 1-73, XP051290551, [retrieved on 2017-03-16]
- "3rd Generation Partnership Project; Technical Specification Group Radio Access Network; Study on New Radio Access Technology; Radio Interface Protocol Aspects (Release 14)", 3GPP STANDARD ; TECHNICAL REPORT ; 3GPP TR 38.804, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V1.0.0, 6 March 2017 (2017-03-06), pages 1-56, XP051290378, [retrieved on 2017-03-06]
- LG ELECTRONICS INC: "NR Capability update and coordination", 3GPP DRAFT; R2-1700238_NR CAPABILITY UPDATE AND COORDINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051210820, Retrieved from the Internet: URL:http://www.3gpp.org/ftp/Meetings_3GPP_ SYNC/RAN2/Docs/ [retrieved on 2017-01-17]

## Description

### TECHNICAL FIELD

The present invention relates to the field of telecommunications and, in particular, to terminal capability negotiation method and apparatus, and a storage medium.

### BACKGROUND

In the configuration operation of traditional Long Term Evolution (LTE) Dual-Connection (DC) or Multi-Connection (MC), since LTE master and secondary base stations have the same Radio Access Technology (RAT) attribute, only a master node is responsible for the allocation and cooperation of various capabilities (such as radio frequency (RF) band, buffer, etc.) of a User Equipment (UE) between the master and secondary base stations. A Master evolved NodeB (MeNB) can understand current Secondary Cell Group (SCG) specific configuration of a Secondary evolved NodeB (SeNB), thus knows clearly how many UE capabilities should be allocated to a SCG side, and whether the part allocated to SCG is reasonable. With the flow of SCG addition/modification and the like, the MeNB can know how many UE capabilities are needed on an SeNB side.

In the configuration operation of New Radio (NR)/LTE DC (4/5G heterogeneous system dual-connection), NR/LTE DC master and secondary base station have different RAT attributes, a Secondary Node side is allowed to independently generate its own Radio Resource Control (RRC) Protocol Data Unit (PDU), and a Master Node may not be able to parse and understand the content of the RRC PDU, and thus cannot deduce how many UE capabilities are consumed in real time on the SCG side, and the Master Node cannot determine whether a part of the UE capabilities that is currently allocated to the SCG side is sufficient and reasonable.

In the 4G LTE Rel-12 version, a DC technology is standardized, and a UE simultaneously establishing two independent Radio Link (RL) connections with an MeNB and an SeNB is implemented. The UE may configure an SCG Bearer or a Split Bearer (downlink Split only), and at this time, the UE may simultaneously obtain Data Radio Bearer (DRB) services provided by radio resources of two dissimilar-frequency base stations through Non Co-site.

In the LTE Rel-13 version, an enhanced dual-connection (eDC) technology is further standardized, and a UE simultaneously establishing two independent RL connections with an MeNB (the master serving base station in LTE) and an SeNB (the secondary serving base station in LTE) is implemented. The UE may be further configured with a Split Bearer (uplink splitting supplemented), and at this time, the UE may simultaneously obtain DRB services provided by radio resources of two dissimilar-frequency base stations through Non Co-site, and some mobility scene is added, such as switching across the MeNBs but keeping the SeNB unchanged.

For the conventional LTE DC, only the Signaling Radio Bearer (SRB) on the MeNB side, also referred to as Master Cell group (MCG) SRB in short, can be configured between an eNB base station and a UE for transmitting RRC messages. The SeNB side only has a common SRB0 for transmitting Common Control Channel (CCCH) uplink messages, but does not have a dedicated SRB and cannot directly transmit RRC messages, so any configuration operations related to RRC and generated on the SeNB side must be transmitted by using the MCG SRB.

In the early stage of the introduction of the 5G NR gNB, since the operator mainly depends on Evolved Packet Core (EPC), a large amount of LTE eNBs are still available in the existing network, and the NR gNB may not be able to work independently in a standalone manner, for example, the NG interface of the 5G core (NGC) network is not supported or the NR System Information (SI) message is not supported. Thus the Non standalone gNB can only work by the way of LTE/NR Tight Interworking, also referred to as LTE/NR DC. This deployment manner is called Option3/3a/3x, and Option3/3a/3x corresponds to different DRB types of the MCG Split Bearer, the SCG Bearer, and the SCG Split Bearer respectively.

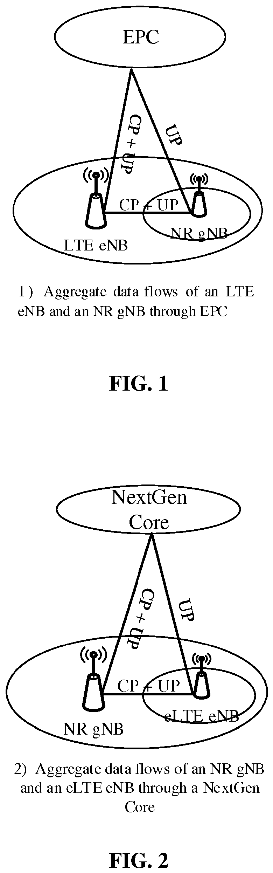

FIG. 1 is a network architecture diagram 1 in the related art of the present invention. The Option 3/3a/3x in the FIG. 1 evolves with the maturity of functions of the NR gNB base station and the completeness of the related art, such as supporting the NG interface of the NGC and supporting the NR SI message. At the same time, operators are gradually transitioning from EPC to the new core network NGC. At this time, the NR gNB can work independently in the Standalone manner.

This gNB independent deployment mode is called Option2. At the same time, the operator also upgrades a large number of eNB base stations to evolved LTE (eLTE) eNB base stations, so that eLTE eNB base stations can be connected to the NGC and be managed by the NGC just like NR gNBs, and an eLTE eNB base station can also be connected to a gNB through an Xn interface.

This independent deployment mode of the eLTE eNB base station is called Option5. Option2/5 does not belong to the LTE/NR DC scene, and therefore will not be described in detail below.

FIG. 2 is a network architecture diagram 2 in the related art of the present invention, and as shown in FIG. 2, LTE/NR Tight Interworking can also be performed between the NR gNB and the eLTE eNB. When the gNB is used as the Master Node and the eLTE eNB is used as the Secondary Node, the deployment mode is referred to as Option 4/4a. Conversely, when the eLTE eNB is used as the Master Node and the gNB is used as the Secondary Node, the deployment mode is referred to as Option7/7a/7x. Similar to the 3 series in FIG. 1, the above 4/7 sub-series correspond to different DRB Types. Therefore, in general, the LTE/NR DC scene includes three main categories: Option3/3a/3x, Option4/4a, and Option7/7a/7x. Option3/3a/3x is still considered as a 4G heterogeneous dual-connection scene since Option3/3a/3x is connected to EPC and adopts an old E-UTRAN Radio Access Bearer (E-RAB) Based Quality of Service (QOS) model; while Option4/4a and Option7/7a/7x are considered as 5G heterogeneous dual-connection scenes since Option4/4a and Option7/7a/7x each are connected to the NGC and adopt a new PDU Session Based QOS model, and multiple connections may be derived on the basis of dual-connection, that is, the UE is simultaneously connected to more gNBs and eNBs to perform data transmission on the control plane/user plane.

For LTE/NR DC, in addition to MCG SRB on the master Node side, a dedicated SRB on the secondary Node side which is referred to as the SCG SRB, can also be configured between the base station and the UE. The SCG SRB may be used to directly transmit RRC uplink and downlink messages only related to the Secondary Node, such as the Radio Resource Management (RRM) measurement report message. Thus, any configuration operations related to RRC and independently generated by the Secondary Node side may be directly transmitted through the SCG SRB without using the MCG SRB.

In the configuration operation of the NR/LTE DC (4/5G heterogeneous system dual-connection), since NR/LTE DC master and secondary base stations have different RAT attributes, the Secondary Node side is allowed to independently generate its own RRC PDU, and directly sends the RRC PDU to the UE through the SCG SRB, but the Master Node may not be able to parse and understand the content of the RRC PDU, and thus cannot deduce how many UE capabilities are consumed in real time on the SCG side, and the Master Node cannot determine whether the current UE capability allocated to the SCG side is sufficient and reasonable. For simplicity of explanation, the particular capability of Radio Frequency (RF) Band Combination supported by UE will be taken as an example.

It is assumed that a certain 4/5G dual mode terminal (e.g.UE) can independently support a frequency band (A, B) in the LTE Domain. According to the radio capability report of the UE, a serving eNB can know the particular capabilities of the UE , such as the maximum number of LTE carriers aggregated, LTE Multi-input Multi-output (MIMO) orders, Softchanel Bits, etc. in the frequency band (A, B). The UE can independently support a frequency band (C, D, E) in the NR Domain. According to the radio capability report of the UE, the serving gNB can know the particular capabilities of the UE, such as the maximum number of NR carriers aggregated, NR MIMO orders, Softchanel Bits, etc. in the frequency band (C , D, E), and meanwhile if the UE is in the NR/LTE DC operation mode, the NR/LTE frequency band combination (A+C, A+E, B+D) can also be supported. It should be noted here that although theoretically more combinations, such as (A+D, B+C, B+E), of the frequency bands independently supported by the LTE and the NR exist, NR/LTE DC operations may not be supported in these combinations of frequency bands, which depends on the final implementation and capabilities of UEs of different vendors. Therefore, the UE needs to report various capabilities that are exclusive to the NR/LTE DC to the master/secondary base station to prevent configuration abnormalities.

It is assumed that the UE has been configured to be in the NR/LTE DC Option7 operation mode, that is, MeNB + Secondary Next Generation NodeB (SgNB) is currently in the frequency band combination (A+C), that is, MCG cells in the MeNB are in the frequency band A, and SCG cells in the SgNB are in the frequency band C. Since the MCG and the SCG have their respective relatively independently maintained RRM measurements and reports, the MeNB may only know the radio signal/load condition of the target frequency point in the band supported by the LTE side, and the SgNB may only know the radio signal/load condition of the target frequency point in the frequency band supported by the NR side. The MeNB/SgNB may not be able to know the specific situation of the other party in real time, such as which frequency band is currently located, how many carriers are aggregated, and how many other UE capabilities are consumed.

At a certain moment, the SgNB (secondary serving base station in NR, which corresponds to the Master Next Generation NodeB (MgNB)) wants to reconfigure its own SCG Cells into the frequency band D based on a radio measurement report of the UE on the SCG side (for example, because the quality of several service cells in the source frequency band C becomes poor). As described above, since NR/LTE DC cannot support the frequency band combination (A+D) but can support the frequency band combination (B+D), in order to cooperate with the cell movement reconfiguration on the SCG side, the cell on the MCG side may also need to move and to be reconfigured, which requires the SgNB to cooperate with the MeNB in this aspect of the UE capability before the RRC reconfiguration is initiated locally. Thus the SgNB and the MeNB are associated with each other and potential capability conflicts may occur. The advantage of UE capability coordination is that the Master Node can know the UE capability division request and the back reason from the Secondary Node in real time. Therefore, the MCG side and the SCG side each can adopt a more reasonable RRM/RRC action to perform adaptation. Otherwise, as described in the above example, if NR/LTE DC cannot support the frequency band combination (A+D), and SCG Cells forcibly want to go to the frequency band D, the operation mode of NR/LTE DC may be caused to fail, and the UE has to return to the single-connection operation mode. During the reconfiguration process after the failure, the user's service experience is affected to different degrees. If the SgNB negotiates and coordinates with the MeNB in some way before the "Reconfiguration to the frequency band D" request is initiated, the MeNB may have at least the following RRM/RRC actions in order to maintain the NR/LTE DC operation mode.
1: The MeNB directly rejects the request of the SgNB for "reconfiguration of SCG Cells to the frequency band D", and may perform a DRB Type change flow. SCG Bearers are firstly returned to the MCG side, only the SCG SRB is left, and the entire NR/LTE DC operation mode continues.
2: The MeNB agrees the request of the SgNB for "reconfiguration of SCG Cells to the frequency band D", and the MeNB reconfigures the MCG Cells to the frequency band B because the NR/LTE DC can support the frequency band combination (B+D). The entire NR/LTE DC operation mode continues.
3: The MeNB rejects the request of the SgNB for "reconfiguration of SCG Cells to the frequency band D", but gives auxiliary information to suggest: whether the SgNB want to reconfigure the SCG Cells to a frequency band E instead of the frequency band D because NR/LTE DC can support the frequency band combination (A+E), and thus the MeNB may continue to maintain the MCG Cells in the frequency band A. The entire NR/LTE DC operation mode continues.
4: The MeNB decides to delete all SCG Cells and quit the NR/LTE DC operation mode. The UE capability no longer needs to be coordinated on both sides.

The document by ZTE R3-170536, for 3GPP TSG RAN WG3, entitled "UE Capability Coordination over XnAP and X2AP Due to NR-LTE Tight lnterworking" discusses more about impacts of UE capability coordination on Xn and X2 interfaces, and discusses three observations: observation 1: Master Node should provide Secondary Node with explicit info related to already occupied or leftover part of UE capability; observation 2: Secondary Node should provide Master Node with explicit info related to already occupied or leftover part of UE capability; observation 2: Secondary Node should provide Master Node with explicit info related to already occupied or leftover part of UE capability; observation 3: Secondary Node should be allowed to provide Master Node with explicit info related to "Require for more or less UE capability on SCG".

The report by ZTE, R2-1700407, for 3GPP TSG RAN WG3, entitled "Report of Email discussion 96-33 UE capability coordination" discloses some potential solutions for capability coordination solution: solution 1: Coordination based on UE initiated capability update indication, solution 2: Coordination based on coordination assistant information reported from UE side, solution 3: UE capability sets based coordination, solution 4: Semi-static capability split at NW based coordination, solution 5: Capability application-confirmation /Common capability across RATs based coordination, solution 6: Capability consumption notification /Common capability across RATs based coordination, solution 7: Conflicts indicated in UE capabilities, throughput based negotiation across Xn, solution 8: Coordination container/Common across RATs configuration based coordination.

The document entitled "3GPP; Technical Specification Group Radio Access Network; Study on New Radio (NR) Access Technology (Release 14)" - 3GPP TR38.912, V1.0.0, 2017-03, discloses that only two nodes (i.e. one eNB and one gNB) need to be involved. Nevertheless, for the UE capabilities requiring coordination between LTE and NR, the forward compatibility towards multiple node connectivity can be considered as well. It is up to the master node to decide on how to resolve the dependency between LTE and NR. The secondary node can initiate the re-negotiation of the UE capability. Upon receiving the re-negotiation request from the secondary node, it is up to the master node to make the final decision.

The document entitled "3GPP; Technical Specification Group Radio Access Network; Study on New Radio Access Technology; Radio Interface Protocol Aspects (Release 14)" - 3GPP TR38.804, V1.0.0, 2017-03, discloses that only two nodes (i.e. one eNB and one gNB) need to be involved. Nevertheless, for the UE capabilities requiring coordination between LTE and NR, the forward compatibility towards multiple node connectivity can be considered as well. It is up to the master node to decide on how to resolve the dependency between LTE and NR. The secondary node can nitiate the re-negotiation of the UE capability. Upon receiving the re-negotiation request from the secondary node, it is up to the master node to make the final decision.

### SUMMARY

The embodiments of the present invention provide a terminal capability negotiation method and apparatus, and a storage medium, according to the independent claims, so as to at least solve the technical problem that a master serving base station and a secondary serving base station cannot negotiate UE capability in a multi-connection network system of LTE and NR. Further improvements are provided in the dependent claims. The invention is set out in the appended set of claims.

In the embodiments of the present invention, in the multi-connection scene including an LTE network and an NR network, the secondary serving base station initiates a UE capability negotiation request to the master serving base station according to the local SCG configuration requirement, where the UE capability negotiation request is used for negotiating about the UE capability; and the secondary serving base station receives the UE capability negotiation reply fed back by the master serving base station in response to the UE capability negotiation request. The technical problem that the master serving base station and the secondary serving base station cannot negotiate the UE capability in the multi-connection network system of LTE and NR can be solved, so that the performance of NR/LTE DC is kept to be the best as much as possible, signaling overhead caused by unnecessary failure processing/mode reconfiguration is reduced, and the maintenance load of all RRM operations of the UE performed by the single side of the master base station is reduced.

### BRIEF DESCRIPTION OF DRAWINGS

The drawings described herein are used to provide a further understanding of the present invention, and form a part of the present invention. The exemplary embodiments and descriptions thereof in the present invention are used to explain the present invention and do not limit the present invention in any improper way. In the drawings:
FIG. 1 is a network architecture diagram 1 in the related art of the present invention;
FIG. 2 is a network architecture diagram 2 in the related art of the present invention;
FIG. 3 is a flowchart of a conventional terminal capability negotiation method;
FIG. 4 is a flowchart of another conventional terminal capability negotiation method;
FIG. 5 is a structural block diagram of a terminal capability negotiation apparatus according to an embodiment of the present invention;
FIG. 6 is a structural block diagram of another terminal capability negotiation apparatus according to an embodiment of the present invention;
FIG. 7 is a schematic flowchart of a UE capability negotiation process in an NR/LTE DC scene according to an embodiment of the present invention;
FIG. 8 is a schematic flowchart of a specific embodiment 1 of the present invention;
FIG. 9 is a schematic flowchart of a specific embodiment 2 of the present invention;
FIG. 10 is a schematic flowchart of a specific embodiment 3 of the present invention; and
FIG. 11 is a schematic flowchart of a specific embodiment 4 of the present invention.

### DETAILED DESCRIPTION

Hereinafter the present invention will be described in detail with reference to the drawings and in conjunction with embodiments. It is to be noted that if not in collision, the embodiments and features therein in the present invention may be combined with each other.

It is to be noted that the terms "first", "second" and the like in the description, claims and above drawings of the present invention are used to distinguish between similar objects and are not necessarily used to describe a particular order or sequence.

### Embodiment 1

The embodiment of the present invention may be run on a network architecture shown in FIG. 1 or FIG. 2.

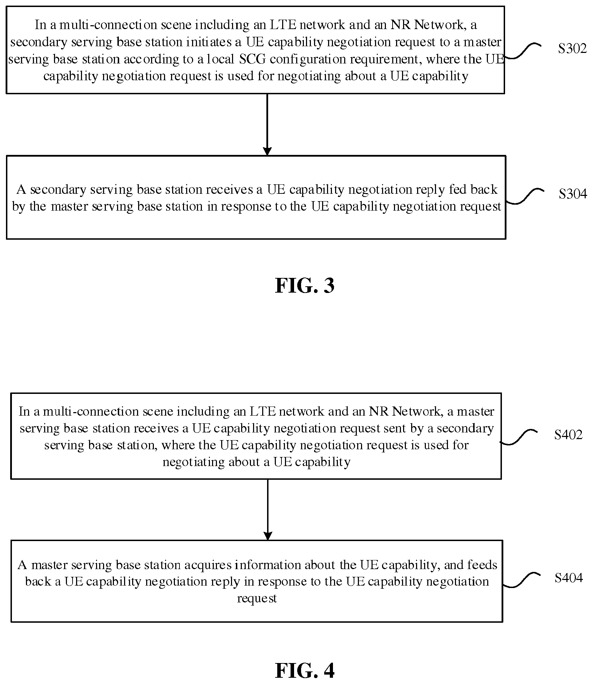

The present embodiment provides a terminal capability negotiation method executed on the network architecture described above. FIG. 3 is a flowchart of a conventional terminal capability negotiation method.

As shown in FIG. 3, the process includes the following steps. In S302, in a multi-connection scene including an LTE network and an NR Network, a secondary serving base station initiates a UE capability negotiation request to a master serving base station according to a local SCG configuration requirement, where the UE capability negotiation request is used for negotiating about a UE capability.

In S304, the secondary serving base station receives a UE capability negotiation reply fed back by the master serving base station in response to the UE capability negotiation request.

Through the above steps, in the multi-connection scene including an LTE network and an NR network, the secondary serving base station initiates the UE capability negotiation request to the master serving base station according to the local SCG configuration requirement, where the UE capability negotiation request is used for negotiating about the UE capability; and the secondary serving base station receives the UE capability negotiation reply fed back by the master serving base station in response to the UE capability negotiation request. The technical problem that the master and secondary serving base stations cannot negotiate about the UE capability in the multi-connection network system of LTE and NR can be solved, so that the performance of NR/LTE DC is kept to be optimum as much as possible, signaling overhead caused by unnecessary failure processing/mode reconfiguration is reduced, and the maintenance load of all RRM operations performed by the single side of the master base station on the UE is reduced.

In the invention, the UE capability negotiation request comprises the following: current actual consumption/occupation amount of a UE particular capability; a requested absolute or relative amount of the UE particular capability; a cause of requesting the UE particular capability; and when a request for the UE particular capability is rejected by the master serving base station, whether the secondary serving base station is willing to accept a suggested value of the UE particular capability from the master serving base station.

In other embodiments, the UE particular capability includes at least one of the following: a frequency band capability supported by a UE or a frequency band combination capability supported by the UE; an ability of the UE to aggregate a maximum number of carriers and a total spectral bandwidth; a maximum number of Transport Blocks (TBs) that the UE can transmit in each Transmission Time Interval (TTI); UE air interface user plane layer 2 (L2) protocol buffer size; or a whole number of UE air interface physical layer soft channel bits. Optionally, the step S302 may include that: the secondary serving base station initiates the UE capability negotiation request to the master serving base station through an Xn Application Protocol (XnAP) process message or an X2 Application Protocol (X2AP) process message according to the local SCG configuration requirement, where the UE capability negotiation request message includes a configuration parameter required by negotiation.

After the secondary serving base station receives the UE capability negotiation reply fed back by the master serving base station in response to the UE capability negotiation request, the method further includes: the master serving base station initiates the UE capability negotiation reply to the secondary serving base station through an XnAP or X2AP process message according to a local UE capability reallocation negotiation result, where the UE capability negotiation reply message includes parameters of the negotiation result; and that the secondary serving base station analyzes the UE capability negotiation reply to determine the negotiation result of the UE capability.

Optionally, the negotiation result includes at least one of the following: whether the master serving base station agrees to allocate a requested absolute or relative amount of UE particular capabilities from the secondary serving based station; whether the master serving base station allocates a suggested value for the UE particular capability, and specific suggested value content; whether the UE particular capability reallocation affects the configuration and the data radio bearer operation condition of a MCG side; or a cause of rejecting a request from the secondary serving base station for the UE particular capability.

In some embodiments, one or more UE particular capabilities are negotiated simultaneously, and the respective configuration/result parameters are independent.

The present embodiment provides another terminal capability negotiation method executed on the network architecture described above. FIG. 4 is a flowchart of another conventional terminal capability method. As shown in FIG. 4, the process includes the following steps.

In S402, in a multi-connection scene including an LTE network and an NR Network, a master serving base station receives a UE capability negotiation request sent by a secondary serving base station, where the UE capability negotiation request is used for negotiating about a UE capability.

In S404, the master service base station acquires information about the UE capability, and feeds back a UE capability negotiation reply in response to the UE capability negotiation request. Optionally, the above steps may be executed by MeNB+SgNB and MgNB+SeNB in a combination form, that is, the secondary serving base station may be SgNB and SeNB, and the master serving base station may be MeNB, MgNB, etc .

Optionally, one or more UE particular capabilities are negotiated simultaneously, and the respective configuration/result parameters are independent.

In the present invention, the UE capability negotiation request comprises: the current actual consumption/occupation amount of the UE particular capability; a requested absolute or relative amount of the UE particular capability; the cause of requesting the UE particular capability; and when a request for the UE particular capability is rejected by the master serving base station, whether the secondary serving base station is willing to accept the suggested value from the master serving base station. Specifically, the UE particular capability includes at least one of the following: the frequency band capability supported by the UE or the frequency band combination capability supported by the UE; the ability of the UE to aggregate the maximum number of carriers and the total spectral bandwidth; the maximum number of TBs that the UE can transmit in each TTI; UE air interface user plane L2 protocol buffer size; or a whole number of UE air interface physical layer soft channel bits.

Optionally, the step in which the secondary serving base station initiates the UE capability negotiation request to the master serving base station according to the local SCG configuration requirement includes: the secondary serving base station initiates the UE capability negotiation request to the master serving base station through the XnAP or X2AP process message according to the local SCG configuration requirement, where the UE capability negotiation request message includes the configuration parameter required by negotiation.

Optionally, after the secondary serving base station receives the UE capability negotiation reply fed back by the master serving base station in response to the UE capability negotiation request, the method further includes: the master serving base station initiates a UE capability negotiation reply to the secondary serving base station through an XnAP or X2AP process message according to the local UE capability reallocation negotiation result, where the UE capability negotiation reply message includes parameters of the negotiation result; and that the secondary serving base station analyzes the UE capability negotiation reply to determine the negotiation result of the UE capability.

Optionally, the negotiation result may be, but is not limited to: whether the master serving base station agrees to allocate a requested absolute or relative amount of UE particular capabilities from the secondary serving based station; whether the master serving base station allocates a suggested value for the UE particular capability, and specific suggested value content; whether UE particular capability reallocation affects the configuration and the data radio bearer operation condition of the MCG side; and a cause of rejecting a request from the secondary serving base station for the UE particular capability.

Optionally, the UE capability negotiation reply includes at least one of the following: a requested absolute or relative amount of the UE specific capacity allocated by the secondary serving base station to the master serving base station; whether the master serving base station allows a request from the secondary serving base station for the UE particular capability; whether allocation of the UE particular capability by the master serving base station particular capability affects the current configuration and data radio bearer operation condition of the MCG side; or a reject cause value in a case where the request for the UE particular capability is rejected by the master serving base station.

From the description of the embodiment described above, it will be apparent to those skilled in the art that the methods in the embodiment described above may be implemented by software plus a necessary general-purpose hardware platform, or may of course be implemented by hardware. However, in many cases, the former is a preferred implementation mode. Based on this understanding, the technical solution of the present invention substantially, or the part contributing to the existing art, may be embodied in the form of a software product. The computer software product is stored in a storage medium (such as a Read-Only Memory (ROM)/Random Access Memory (RAM), a magnetic disk or an optical disk) and includes several instructions for enabling a terminal device (which may be a mobile phone, a computer, a server, a network device or the like) to execute the corresponding method.

### Embodiment 2

The embodiment of the present invention further provides a terminal capability negotiation apparatus. The apparatus is configured to implement the above mentioned embodiments and preferred embodiments. What has been described will not be repeated. As used below, the term "module" may be software, hardware or a combination thereof capable of implementing predetermined functions. The apparatus in the embodiment described below is preferably implemented by software, but implementation by hardware or by a combination of software and hardware is also possible and conceived.

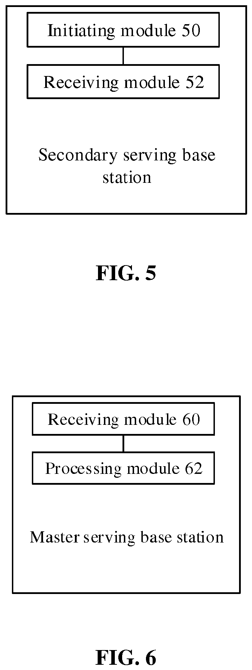

FIG. 5 is a structural block diagram of a terminal capability negotiation apparatus according to an embodiment of the present invention, and the apparatus is applied to a secondary serving base station. As shown in FIG. 5, the apparatus includes: an initiating module 50 and a receiving module 52.

The initiating module 50 is configured to initiate a UE capability negotiation request to a master serving base station according to a local SCG configuration requirement in a multi-connection scene including an LTE network and an NR network, where the UE capability negotiation request is used for negotiating about a UE capability.

The receiving module 52 is configured to receive a UE capability negotiation reply fed back by the master serving base station in response to the UE capability negotiation request.

FIG. 6 is a structural block diagram of another terminal capability negotiation apparatus according to an embodiment of the present invention, and the apparatus is applied to a master serving base station. As shown in FIG. 6, the apparatus includes: a receiving module 60 and a processing module 62.

The receiving module 60 is configured to receive a UE capability negotiation request sent by a secondary serving base station in a multi-connection scene including an LTE network and an NR network, where the UE capability negotiation request is used for negotiating about a UE capability.

The processing module 62 is configured to acquire information about the UE capability and feed back a UE capability negotiation reply in response to the UE capability negotiation request. the UE capability negotiation request includes at least one of the following: current actual consumption/occupation amount of a UE particular capability; a requested absolute or relative amount of the UE particular capability; a cause of requesting the UE particular capability; or when a request for the UE particular capability is rejected by the master serving base station, whether the secondary serving base station is willing to accept a suggested value from the master serving base station. Specifically, the UE particular capability includes at least one of the following: a frequency band capability supported by a UE or a frequency band combination capability supported by the UE; an ability of the UE to aggregate the maximum number of carriers and a total spectral bandwidth; the maximum number of TBs that the UE can transmit in each TTI; UE air interface user plane L2 protocol buffer size; or a whole number of UE air interface physical layer soft channel bits.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment 3

Content of the present invention is applicable to the deployment scene of the NR/LTE DC Option 3/4/7 sub-series, and the case of multiple connections between more service base station nodes, that is, the Master Node and the Secondary Node are of heterogeneous and different RAT types, and at the moment, the Master Node and the Secondary Node cannot directly understand SCG/MCG configuration content of each other, so that the actual consumption of the UE particular capability by the opposite base station node cannot be derived.

A certain "particular capability that may be shared and negotiated for use on both sides of NR/LTE" (corresponding to "particular capability") in the UE includes, but is not limited to: a frequency band (combination) capability supported by the UE; the ability of the UE to aggregate the maximum number of carriers and the total spectral bandwidth; the maximum number of TBs that the UE can transmit in each TTI; UE air interface user plane L2 protocol buffer size; a whole number of UE air interface physical layer soft channel bits, etc. When the system is about to enter or is already in a certain operation mode of the NR/LTE DC, the Master Node and the Secondary Node need to negotiate/allocate one by one (Per UE capability granularity) the involved particular capabilities (one or more) of the UEs according to the following processes.
1: The secondary node initiates a UE capability negotiation request to the Master Node through the XnAP process message according to the local specific SCG configuration request, and the contained auxiliary information includes, but is not limited to: the current actual consumption/occupation amount (Current Consumption) of a UE particular capability, a requested absolute or relative amount (Request Amount), the cause of requesting the UE capability (Request Cause Value), and if the request is rejected by the Master Node, whether the Secondary Node is willing to accept a new suggested value from the Master Node side (Suggestion Enquiry).
2: The same request message of the UE particular capability may simultaneously and independently include the auxiliary request information of each particular capability (one or more).
3: After receiving the UE capability request message, the Master Node analyzes and determines each UE particular capability request one by one.

Through the signal element of Current Consumption, the current consumption of the UE particular capability on the SCG side can be acquired.

Through the signal element of Request Amount, the current allocation and request situation for the UE particular capability on the SCG side can be acquired.

Through the signal element of Request Cause Value, the cause of the current request for the UE particular capability on the SCG side can be acquired.

When Suggestion Enquiry = True, the Master Node may give its own new suggested value (Allocated Amount), that is, the value different from the value of Request Amount based on the signal elements of Request Amount and Request Cause Value.

When Suggestion Enquiry = False, based on the signal elements of Request Amount and Request Cause Value, the Master Node can only give a reply to the request's decision result (Request Agreed = Yes or No), that is, it is not necessary to give a new suggested value different from the Request Amount.

4: The Master Node initiates a UE capability negotiation reply to the Secondary Node through the XnAP process message, and the contained auxiliary information includes but is not limited to: a newly allocated absolute or relative amount (Allocated Amount) of the UE particular capability or the Yes or No reply to the Request Amount; whether the allocation of the UE particular capability affects the current configuration and the data radio bearer operation condition of the MCG side (MCG Impact Value = Yes or No); and the Reject Cause Value) if the request is rejected by the Master Node.

5: After receiving the UE capability negotiation reply message, the Secondary Node analyzes and determines the reply to the UE particular capability request one by one.

Through the signal element of Request Agreed = Yes or No, it can be known whether the Master Node agrees to allocate the previous Request Amount from the Secondary Node).

Through the signal element of Allocated Amount, it can be known whether the Master Node allocates a new suggested value.

Through the signal element of MCG Impact Value, it can be known whether the configuration on the MCG side is affected during the UE particular capability negotiation allocation process.

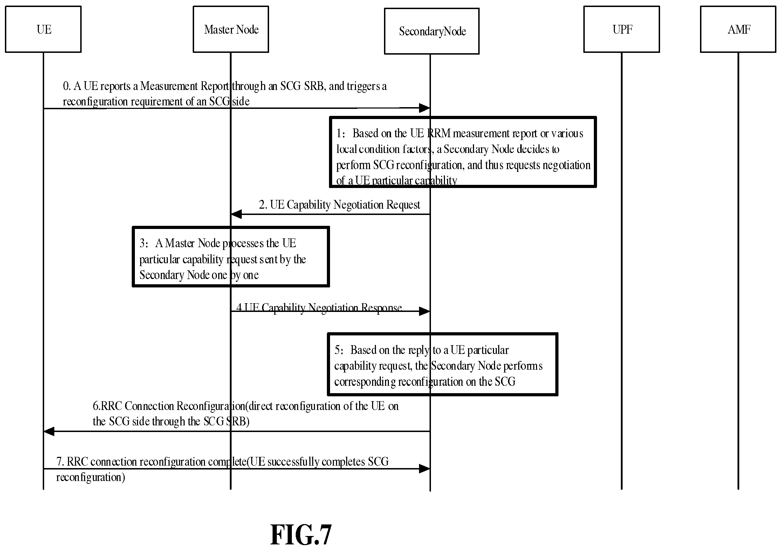

Through the signal element of Reject Cause Value, it can be known why the UE particular capability request from the Secondary Node is rejected. FIG. 7 is a schematic flowchart of a UE capability negotiation process in an NR/LTE DC scene according to an embodiment of the present invention.

The present embodiment further includes a plurality of specific embodiments.

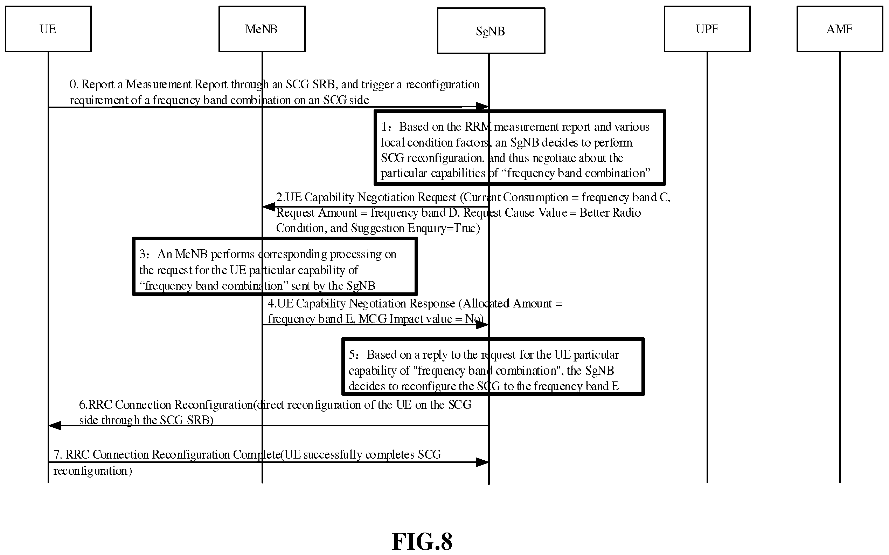

Specific embodiment 1: FIG. 8 is a schematic flowchart of the embodiment 1 of the present invention. As shown in FIG. 8, in a deployment scene of the NR/LTE DC Option7 series, a master base station eLTE MeNB is connected to core network elements Access and Mobility Management Function (AMF) and User Plane Function (UPF) of 5G. In the MeNB physical macro coverage area, dissimilar-frequency SgNB and MeNB are connected to each other via an Xn interface, and for a particular UE,have been configured to be in the NR/LTE DC Option7 operation mode. Moreover, the MeNB+SgNB is currently in the serving frequency band combination (A+C), that is, MCG cells in MeNB are in the band A, and SCG cells in SgNB are in the band C. At a certain time, a UE reports the Measurement Report message through the SCG SRB to inform the SgNB that the signal in the target frequency band D is better than the signal in the current serving frequency band C, but the UE only supports the frequency band combination (A+C, A+E, B+D), so the SgNB needs to negotiate with the MeNB about the UE particular capability of "frequency band combination". A source MeNB and a source SgNB support the related content of the present invention.

Step 101: The SgNB wants to reconfigure its own SCG to the frequency band D based on the UE's RRM measurement report and various local condition factors. Therefore, based on the SCG reallocation requirement the SgNB prepares to initiate a request to the MeNB for the UE particular capability of "frequency band combination" through the XnAP process message of UE Capability Negotiation Request.

Step 102: For the UE particular capability of "frequency band combination", the XnAP process message of UE Capability Negotiation Request sent by the SgNB includes at least the following auxiliary information: Current Consumption = frequency band C, Request Amount = frequency band D, Request Cause Value = Better Radio Condition and Suggestion Enquiry=True.

Step 103: After receiving the negotiation request message for the UE particular capability of "frequency band combination", the MeNB performs the following analysis and determination on the request for the UE particular capability of "frequency band combination".

According to the signal element of Current Consumption = frequency band C, it can be known that the current consumption of the UE particular capability on the SCG side is in the frequency band C.

According to the signal element of Request Amount = frequency band D, it can be known that the SCG side wants to reconfigure the SCG into the frequency band D.

According to the signal element of Request Cause Value = Better Radio Condition, it can be known that the SCG side initiates the negotiation request based on the local "radio condition factor".

According to the signal element of Suggestion Enquiry = True, the MeNB may give other values different from the request (Request Amount = frequency band D), such as giving a suggested value (Allocated Amount = frequency band E).

Step 104: The MeNB initiates a UE capability negotiation reply to the SgNB through the XnAP process message of UE Capability Negotiation Response, and at least the following auxiliary information is included: Allocated Amount = frequency band E, and MCG Impact value = No. Step 105: After receiving the message of UE Capability Negotiation Response via the Xn interface, the SgNB performs the following analysis and determination according to the reply to the UE particular capability of "frequency band combination".

According to the signal element of Allocated Amount = frequency band E, it can be known that the MeNB agrees that if the SCG side condition allows, the SgNB may reconfigure the SCG into the frequency band E.

According to the signal element of MCG Impact value = No, it can be known that the negotiation process of the UE particular capability of "frequency band combination" does not affect the configuration on the MCG side.

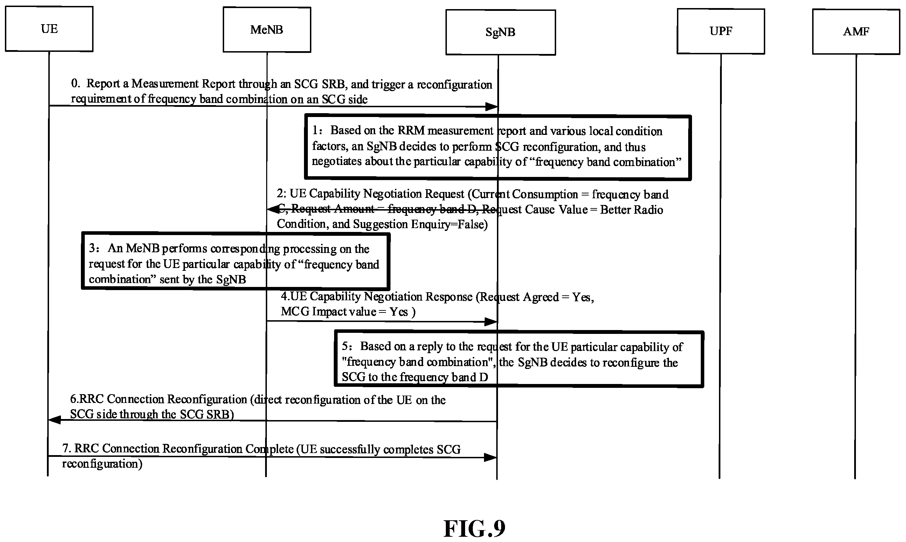

Specific embodiment 2:
As shown in FIG. 9, FIG. 9 is a schematic flowchart of the embodiment 2 of the present invention. In a deployment scene of the NR/LTE DC Option7 series, a master base station eLTE MeNB is connected to core network elements AMF and UPF of 5G. In the MeNB physical macro coverage area, dissimilar-frequency SgNB and MeNB are connected to each other via an Xn interface, and for a particular UE, have been configured to be in the NR/LTE DC Option7 operation mode. Moreover, the MeNB + SgNB is currently in the serving frequency band combination (A+C), that is, MCG cells in MeNB are in the band A, and SCG cells in SgNB are in the band C. At a certain time, a UE reports the Measurement Report message through the SCG SRB to inform the SgNB that the signal in the target frequency band D is better than the signal in the current serving frequency band C, but the UE only supports the frequency band combination (A+C, A+E, B+D), so the SgNB needs to negotiate with the MeNB about the UE particular capability of "frequency band combination". A source MeNB and a source SgNB support the related content of the present invention.

Step 201: The SgNB wants to reconfigure its own SCG to the frequency band D based on the UE's RRM measurement report and various local condition factors. Therefore, based on the SCG reallocation requirement the SgNB prepares to initiate a request to the MeNB for the UE particular capability of "frequency band combination" through the XnAP process message of UE Capability Negotiation Request.

Step 202: For the UE particular capability of "frequency band combination", the XnAP process message of UE Capability Negotiation Request sent by the SgNB includes at least the following auxiliary information: Current Consumption = frequency band C, Request Amount = frequency band D, Request Cause Value = Better Radio Condition and Suggestion Enquiry = False.

Step 203: After receiving the negotiation request message for the UE particular capability of "frequency band combination", the MeNB performs the following analysis and determination on the request for the UE particular capability of "frequency band combination".

According to the signal element of Current Consumption = frequency band C, it can be known that the current consumption of the UE particular capability on the SCG side is in the frequency band C.

According to the signal element of Request Amount = frequency band D, it can be known that the SCG side wants to reconfigure the SCG into the frequency band D.

According to the signal element of Request Cause Value = Better Radio Condition, it can be known that the SCG side initiates the negotiation request based on the local "radio condition factor".

According to the signal element of Suggestion Enquiry = False, the MeNB can only reply "Request Agreed = Yes or No", and cannot give other suggested values for the UE particular capability of "frequency band combination".

Step 204: The MeNB initiates a UE capability negotiation reply to the SgNB through the XnAP process message of UE Capability Negotiation Response, and at least the following auxiliary information is included: Request Agreed = Yes and MCG Impact value = Yes.

Step 205: After receiving the message of UE Capability Negotiation Response through the Xn interface, the SgNB performs the following analysis and determination according to the reply to the request for the UE particular capability of "frequency band combination".

According to the signal element of Request Agreed = Yes, it can be known that the MeNB agrees that the SgNB may reconfigure the SCG into the frequency band D.

According to the signal element of MCG Impact value = Yes, it can be known that the negotiation process of the UE particular capability of "frequency band combination" affects the configuration on the MCG side because the MeNB needs to reconfigure the MCG into the frequency band B.

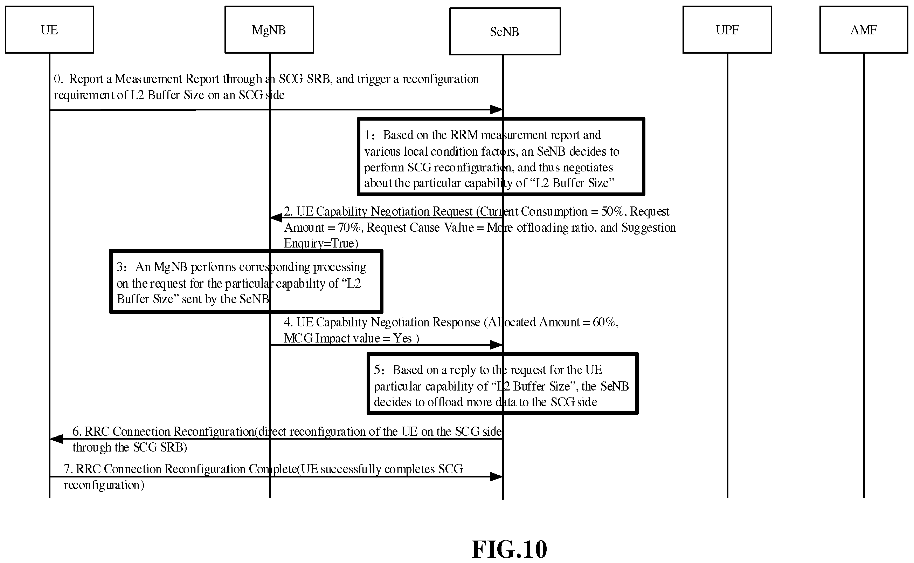

Specific embodiment 3: FIG. 10 is a schematic flowchart of the embodiment 3 of the present invention. As shown in FIG. 10, in a deployment scene of the NR/LTE DC Option4 series, a master base station MgNB is connected to core network elements AMF and UPF of 5G. In the MgNB physical macro coverage area, dissimilar-frequency eLTE SeNB and MgNB are connected to each other via an Xn interface, and for a particular UE, have been configured to be in the NR/LTE DC Option4 operation mode. Moreover, the allocation proportion of the current UE L2 Buffer Size of the MCNB+SeNB is 50 % + 50 %, that is, the upper limit of UE L2 Buffer Size consumed by all MCG Cells in MgNB is 50 % of the total amount, and the upper limit of UE L2 Buffer Size consumed by all SCG Cells in SeNB is 50 % of the total amount. At a certain moment, the UE reports a Measurement Report message through the SCG SRB, and informs the SeNB that signals in all current serving cells of the SCG are good, and more MgNB data can be offloaded, so the SeNB needs to negotiate with the MgNB about the UE particular capability of "L2 Buffer Size". A source MgNB and a source SeNB support the related content of the present invention.

Step 301: The SeNB wants to offload more data to the SCG side based on the UE's RRM measurement report and various local condition factors. Therefore, based on the SCG reallocation requirement the SeNB prepares to initiate a request to the MgNB for the UE particular capability of "L2 Buffer Size" through the XnAP process message of UE Capability Negotiation Request.

Step 302: For the UE particular capability of "L2 Buffer Size", the XnAP process message of UE Capability Negotiation Request sent by the SeNB includes at least the following auxiliary information: Current Consumption = 50 %, Request Amount = 70%, Request Cause Value = More Offloading Ratio and Suggestion Enquiry = True.

Step 303: After receiving the negotiation request message for the UE particular capability of "L2 Buffer Size", the MgNB performs the following analysis and determination on the request for the UE particular capability of "L2 Buffer Size".

According to the signal element of Current Consumption = 50 %, it can be known that the current consumption of the UE particular capability by the SCG side reaches 50 % of the total amount of the UE L2 Buffer Size.

According to the signal element of Request Amount = 70 %, it can be known that the SCG side wants to request more of the L2 Buffer Size in order to support offloading of more data. According to the signal element of Request Cause Value = More Offloading Ratio, it can be known that the SCG side initiates the negotiation request based on the local "wanting to support offloading of more data".

According to the signal element of Suggestion Enquiry = True, the MgNB may give other values different from the request (Request Amount = 70%), such as giving a suggested value (Allocated Amount = 60 %).

Step 304: The MgNB initiates a UE capability negotiation reply to the SeNB through the XnAP process message of UE Capability Negotiation Response, and at least the following auxiliary information is included: Allocated Amount = 60 % and MCG Impact value = Yes.

Step 305: After receiving the message of UE Capability Negotiation Response via the Xn interface, the SeNB performs the following analysis and determination according to the reply to a request for the UE particular capability of "L2 Buffer Size".

According to the signal element of Allocated Amount = 60%, it can be known that the MgNB can only agree to allocate 60 %, not up to 70 %, of the total amount of UE L2 Buffer Size for the SCG.

According to the signal element of MCG Impact value = Yes, it can be known that the negotiation process of the UE particular capability of "L2 Buffer Size" affects the configuration of the MCG side, that is, the MCG can only use 40 % of the total amount of UE L2 Buffer Size at most.

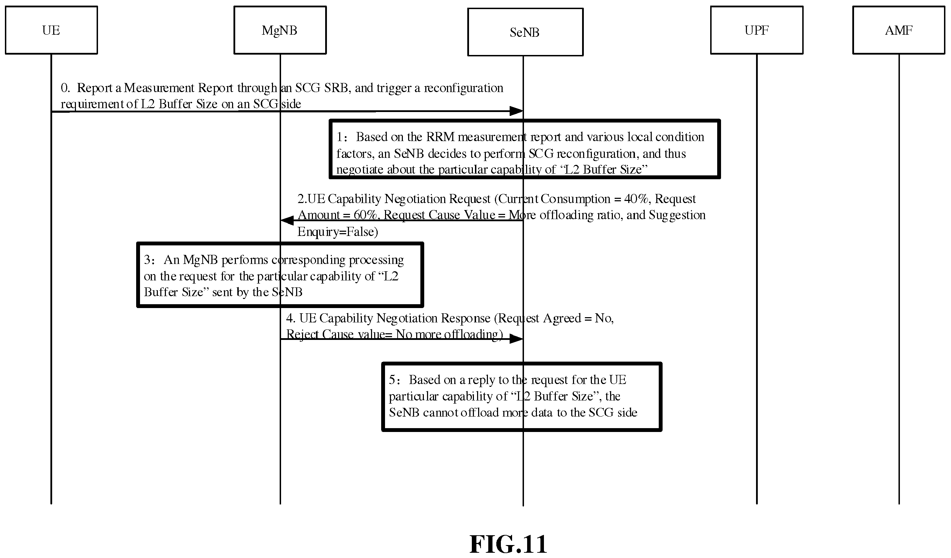

Specific embodiment 4: FIG. 11 is a schematic flowchart of the embodiment 4 of the present invention. As shown in FIG. 11, in a deployment scene of the NR/LTE DC Option4 series, a master base station MgNB is connected to core network elements AMF and UPF of 5G. In the MgNB physical macro coverage area, dissimilar-frequency eLTE SeNB and MgNBs are connected to each other via an Xn interface, and for a particular UE, have been configured to be in the NR/LTE DC Option4 operation mode. Moreover, the allocation proportion of the current UE L2 Buffer Size of the MgNB+SeNB is 60 % + 40 %, that is, the upper limit of UE L2 Buffer Size consumed by all MCG Cells in MgNB is 60 % of the total amount, and the upper limit of UE L2 Buffer Size consumed by all SCG Cells in SeNB is 40% of the total amount. At a certain moment, a UE reports a Measurement Report message through the SCG SRB, and informs the SeNB that signals of all current serving cells of the SCG are good, and more MgNB data can be offloaded, so the SeNB needs to negotiate with the MgNB about the UE particular capability of "L2 Buffer Size". A source MgNB and a source SeNB support the related content of the present invention.

Step 401: The SeNB wants to offload more data to the SCG side based on the UE's RRM measurement report and various local condition factors. Therefore, based on the SCG reallocation requirement the SeNB prepares to initiate a request to the MgNB for the UE particular capability of "L2 Buffer Size" through the XnAP process message of UE Capability Negotiation Request.

Step 402: For the UE particular capability of "L2 Buffer Size", the XnAP process message of UE Capability Negotiation Request sent by the SeNB includes at least the following auxiliary information: Current Consumption = 40 %, Request Amount = 60 %, Request Cause Value = More Offloading Ratio and Suggestion Enquiry = False.

Step 403: After receiving the negotiation request message for the UE particular capability of "L2 Buffer Size", the MgNB performs the following analysis and determination on the request for the UE particular capability of "L2 Buffer Size".

According to the signal element of Current Consumption = 40 %, it can be known that the current consumption of the UE particular capability by the SCG side reaches 40% of the total amount of the UE L2 Buffer Size.

According to the signal element of Request Amount = 60 %, it can be known that the SCG side wants to request more of the L2 Buffer Size in order to support offloading of more data. According to the signal element of Request Cause Value = More Offloading Ratio, it can be known that the SCG side initiates the negotiation request based on the local "wanting to support offloading of more data".

According to the signal element of Suggestion Enquiry = False, the MgNB cannot give other values different from the value of the request (Request Amount = 60 %), but can only agree or reject the request from the SCG side.

Step 404: The MgNB initiates a UE capability negotiation reply to the SeNB through the XnAP process message of UE Capability Negotiation Response, and at least the following auxiliary information is included: Request Agreed = No and Reject Cause value = No more offloading. Step 405: After receiving the message of UE Capability Negotiation Response via the Xn interface, the SeNB performs the following analysis and determination according to the reply to a request for the UE particular capability of L2 Buffer Size".

According to the signal element of Request Agreed = No, it can be known that MgNB does not agree to allocate 60% of the total amount of UE L2 Buffer Size to the SCG maximally. According to the signal element of Reject Cause value = No more offloading, it can be known that during the negotiation process of the UE particular capability of "L2 Buffer Size", the MCG side does not agree to offload more data to the SCG side.

In the NR/LTE DC (4/5G heterogeneous system dual-connection) configuration operation, various related capabilities of the UE can be negotiated between a Master Node and a Secondary Node, and the participating base station nodes provide the various related capabilities of the UE for each other, so that auxiliary information of respective RRM/RRC actions can be optimized, and more reasonable RRM/RRC actions can be taken by two sides of the MCG and the SCG. Therefore the performance of the NR/LTE DC dual-connection is kept to be the best as much as possible, the signaling overhead caused by unnecessary failure processing/mode reconfiguration is reduced, and the maintenance load of all RRM operations of the UE performed by the single side of the Master Node is reduced.

In the NR/LTE DC (4/5G heterogeneous system dual-connection) configuration operation, various related capabilities of the UE can be negotiated between a Master Node and a Secondary Node, and the participating base station nodes provide the various related capabilities of the UE for each other, so that auxiliary information of respective RRM/RRC actions can be optimized, and more reasonable RRM/RRC actions can be taken by two sides of the MCG and the SCG. Therefore the performance of the NR/LTE DC dual-connection is kept to be the best as much as possible, the signaling overhead caused by unnecessary failure processing/mode reconfiguration is reduced, and the maintenance load of all RRM operations of the UE performed by the single side of the Master Node is reduced.

### Embodiment 4

The embodiment of the present invention further provides a storage medium. Optionally, in the present embodiment, the storage medium may be configured to store program codes for performing steps described below.

S1: In a multi-connection scene including an LTE network and an NR Network, a secondary serving base station initiates a UE capability negotiation request to a master serving base station according to a local SCG configuration requirement, where the UE capability negotiation request is used for negotiating about a UE capability.

S2: A UE capability negotiation reply fed back by the master serving base station in response to the UE capability negotiation request is received.

Optionally, in the present embodiment, the storage medium may include, but is not limited to, a USB flash disk, a read-only memory (ROM), a random access memory (RAM), a mobile hard disk, a magnetic disk, an optical disk or another medium capable of storing program codes. Optionally, the storage medium is a non-transitory storage medium.

Optionally, in the present embodiment, the processor performs, according to the program code stored in the storage medium, the following: in a multi-connection scene including an LTE network and an NR network, a UE capability negotiation request is initiated to a master serving base station according to a local SCG configuration requirement, where the UE capability negotiation request is used for negotiating about the UE capability.

Optionally, in the present embodiment, the processor executes, according to the program code stored in a storage medium, receiving a UE capability negotiation reply fed back by the master serving base station in response to the UE capability negotiation request.

Optionally, for specific examples in the present embodiment, reference may be made to the examples described in the above-mentioned embodiments and optional embodiments, and repetition will not be made in the present embodiment.

The present disclosure further provides a base station, which may be the master serving base station or the secondary serving base station described above. In an example not covered by the claimed invention, the J base station may include: a transceiver, a memory, and a processor. The transceiver may be configured to send and receive information. The memory may be configured to store information. The processor is respectively connected to the transceiver and the memory, and is configured to execute the computer executable codes to implement the terminal capability negotiation method provided by one or more of the above technical solutions, for example, implement one or more of the methods shown in FIG. 3 to FIG. 4 and FIG. 7 to FIG. 11.

Apparently, it should be understood by those skilled in the art that each of the above-mentioned modules or steps of the present invention may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention, the scope of which is defined by the appended claims.

### INDUSTRIAL APPLICABILITY

The present invention provides a method for negotiating about a terminal capability between a master serving base station and a secondary serving base station. Through capability negotiation between the master serving base station and the secondary serving base station, the technical problem that UE capability cannot be negotiated between the master serving base station and the secondary serving base station can be solved, so that the performance of the NR/LTE DC dual-connection is kept to be the best as much as possible, signaling overhead caused by unnecessary failure processing/mode reconfiguration is reduced, maintenance load of all RRM operations of the UE performed by the single side of the master base station is reduced, etc. Therefore, the method has positive industrial effect and has the characteristic of simple and convenient implementation.

## Claims

1. A terminal capability negotiation method, comprising:
in a multi-connection scene comprising a Long Term Evolution, LTE, network and a New Radio, NR, network, initiating (S302), by a secondary serving base station, a User Equipment, UE, capability negotiation request to a master serving base station according to a local Secondary Cell Group, SCG, configuration requirement, wherein the UE capability negotiation request is used for negotiating about a UE particular capability on a SCG side; and
receiving (S304), by the secondary serving base station, a UE capability negotiation reply fed back by the master serving base station in response to the UE capability negotiation request;
**characterized in that**,
the UE capability negotiation request comprises: a requested absolute or relative amount of the UE particular capability, a cause of requesting the UE particular capability, in a case that a request for the UE particular capability is rejected by the master serving base station, whether the secondary serving base station is willing to accept a suggested value of the UE particular capability from the master serving base station, and a current actual consumption/occupation amount of a UE particular capability;
when the secondary serving base station is willing to accept the suggested value of the UE particular capability from the master serving base station, the secondary serving base station receives a suggested value different from the value of the requested absolute or relative amount of the UE particular capability, which is given by the master serving base station based on the requested absolute or relative amount of the UE particular capability and the cause of requesting the UE particular capability, wherein the suggested value different from the value of the requested absolute or relative amount of the UE particular capability is comprised in the UE capability negotiation reply; and
when the secondary serving base station is not willing to accept the suggested value of the UE particular capability from the master serving base station, the secondary serving base station receives a decision result whether the requested absolute or relative amount of the UE particular capability is agreed, which is given by the master serving base station based on the requested absolute or relative amount of the UE particular capability and the cause of requesting the UE particular capability, wherein the decision result is comprised in the UE capability negotiation reply.

2. The method of claim 1, wherein the UE particular capability comprise at least one of the following:
a frequency band capability supported by a UE or a frequency band combination capability supported by the UE; an ability of the UE to aggregate a maximum number of carriers and a total spectral bandwidth; a maximum number of Transport Blocks, TBs, that the UE is able to transmit in each Transmission Time Interval, TTI; UE air interface user plane layer 2, L2, protocol buffer size; or a whole number of UE air interface physical layer soft channel bits.

3. The method of claim 1, wherein the initiating, by the secondary serving base station, the UE capability negotiation request to the master serving base station according to the local SCG configuration requirement comprises:
initiating, by the secondary serving base station, the UE capability negotiation request to the master serving base station through an Xn Application Protocol, XnAP process message according to the local SCG configuration requirement.

4. The method of claim 1, wherein after the receiving, by the secondary serving base station, the UE capability negotiation reply fed back by the master serving base station in response to the UE capability negotiation request, the method further comprises:
analyzing, by the secondary serving base station, the UE capability negotiation reply to determine a negotiation result of the UE particular capability.

5. The method of claim 4, wherein the negotiation result comprises at least one of the following:
whether the master serving base station agrees to allocate the absolute or relative amount of the UE particular capability requested by the secondary serving base station;
whether the master serving base station allocates a suggested value for the UE particular capability, and specific suggested value content;
whether reallocation of the UE particular capability influences a configuration and a data radio bearer operation condition of a Master Cell Group, MCG, side; or
a cause of rejecting the request from the secondary serving base station for the UE particular capability.

6. A terminal capability negotiation method, comprising:
in a multi-connection scene comprising a Long Term Evolution, LTE, network and a New Radio, NR, network, receiving (S402), by a master serving base station, a User Equipment, UE, capability negotiation request sent by a secondary serving base station, wherein the UE capability negotiation request is used for negotiating about a UE particular capability on a Secondary Cell Group, SCG, side; and
acquiring (S404), by the master serving base station, information about the UE particular capability, and feeding back , to the secondary serving base station, a UE capability negotiation reply in response to the UE capability negotiation request;
**characterized in that**,
the UE capability negotiation request comprises: a requested absolute or relative amount of the UE particular capability, a cause of requesting the UE particular capability, in a case that a request for the UE particular capability is rejected by the master serving base station, whether the secondary serving base station is willing to accept a suggested value of the UE particular capability from the master serving base station, and a current actual consumption/occupation amount of a UE particular capability;
when the secondary serving base station is willing to accept the suggested value of the UE particular capability from the master serving base station, the master serving base station gives a suggested value different from the value of the requested absolute or relative amount of the UE particular capability, based on the requested absolute or relative amount of the UE particular capability and the cause of requesting the UE particular capability, wherein the suggested value different from the value of the requested absolute or relative amount of the UE particular capability is comprised in the UE capability negotiation reply;
when the secondary serving base station is not willing to accept the suggested value of the UE particular capability from the master serving base station, the master serving base station gives a decision result whether the requested absolute or relative amount of the UE particular capability is agreed, based on the requested absolute or relative amount of the UE particular capability and the cause of requesting the UE particular capability, wherein the decision result is comprised in the UE capability negotiation reply.

7. The method of claim 6, wherein the UE particular capability comprises at least one of the following:
a frequency band capability supported by a UE or a frequency band combination capability supported by the UE; an ability of the UE to aggregate a maximum number of carriers and a total spectral bandwidth; a maximum number of Transport Blocks, TBs, that the UE is able to transmit in each Transmission Time Interval, TTI; UE air interface user plane layer 2, L2, protocol buffer size; or a whole number of UE air interface physical layer soft channel bits.

8. The method of claim 6, wherein the UE capability negotiation reply further comprises at least one of the following:
whether allocation of the UE particular capability by the master serving base station influences a current configuration and a data radio bearer operation condition of a Master Cell Group, MCG, side; or
a reject cause value in a case where the request for the UE particular capability is rejected by the master serving base station.

9. A terminal capability negotiation apparatus for a secondary serving base station, the terminal capability negotiation apparatus comprising:
an initiating module (50), which is configured to initiate a User Equipment, UE, capability negotiation request to a master serving base station according to a local Secondary Cell Group, SCG, configuration requirement in a multi-connection scene comprising a Long Term Evolution, LTE, network and a New Radio, NR, network, wherein the UE capability negotiation request is used for negotiating about a UE particular capability on a SCG side; and
a receiving module (52), which is configured to receive a UE capability negotiation reply fed back by the master serving base station in response to the UE capability negotiation request;
**characterized in that**,
the UE capability negotiation request comprises: a requested absolute or relative amount of the UE particular capability, a cause of requesting the UE particular capability, in a case that a request for the UE particular capability is rejected by the master serving base station, whether the secondary serving base station is willing to accept a suggested value of the UE particular capability from the master serving base station, and a current actual consumption/occupation amount of a UE particular capability;
when the secondary serving base station is willing to accept the suggested value of the UE particular capability from the master serving base station, the receiving module (52) is further configured to receive a suggested value different from the value of the requested absolute or relative amount of the UE particular capability, which is given by the master serving base station based on the requested absolute or relative amount of the UE particular capability and the cause of requesting the UE particular capability, wherein the suggested value different from the value of the requested absolute or relative amount of the UE particular capability is comprised in the UE capability negotiation reply; and
when the secondary serving base station is not willing to accept the suggested value of the UE particular capability from the master serving base station, the receiving module (52) is further configured to receive a decision result whether the requested absolute or relative amount of the UE particular capability is agreed, which is given by the master serving base station based on the requested absolute or relative amount of the UE particular capability and the cause of requesting the UE particular capability, wherein the decision result is comprised in the UE capability negotiation reply.

10. A terminal capability negotiation apparatus for a master serving base station, the terminal capability negotiation apparatus comprising:
a receiving module (60), which is configured to receive a User Equipment, UE, capability negotiation request sent by a secondary serving base station in a multi-connection scene comprising a Long Term Evolution, LTE, network and a New Radio, NR network, wherein the UE capability negotiation request is used for negotiating about a UE particular capability on a Secondary Cell Group, SCG, side; and
a processing module (62), which is configured to acquire information about the UE particular capability, and feed back , to the secondary serving base station, a UE capability negotiation reply in response to the UE capability negotiation request;
**characterized in that**,
the UE capability negotiation request comprises: a requested absolute or relative amount of the UE particular capability, a cause of requesting the UE particular capability, in a case that a request for the UE particular capability is rejected by the master serving base station, whether the secondary serving base station is willing to accept a suggested value of the UE particular capability from the master serving base station, and a current actual consumption/occupation amount of a UE particular capability;
when the secondary serving base station is willing to accept the suggested value of the UE particular capability from the master serving base station, the processing module (62) is further configured to give the suggested value different from the value of the requested absolute or relative amount of the UE particular capability, based on the requested absolute or relative amount of the UE particular capability and the cause of requesting the UE particular capability, wherein the suggested value different from the value of the requested absolute or relative amount of the UE particular capability is comprised in the UE capability negotiation reply;
when the secondary serving base station is not willing to accept the suggested value of the UE particular capability from the master serving base station, the processing module (62) is further configured to give a decision result whether the requested absolute or relative amount of the UE particular capability is agreed, based on the requested absolute or relative amount of the UE particular capability and the cause of requesting the UE particular capability, wherein the decision result is comprised in the UE capability negotiation reply.

11. A storage medium, which is configured to store a program code which, when executed by a computer of a terminal capability negotiation apparatus of a secondary serving base station, or a computer of a terminal capability negotiation apparatus of a master serving base station, respectively, causes the corresponding apparatus to implement the method of any one of claims 1 to 5 or 6 to 8, respectively.

## Patentansprüche

1. Verfahren zur Aushandlung von Fähigkeiten für Endgeräte, welches umfasst:
in einem Fall einer mehrfachen Verbindung, das ein Netzwerk langfristiger Entwicklung, LTE-Netz, (Long Term Evolution) und ein Netzwerk neuen Funks, NR-Netz, (New Radio) aufweist, ein Initiieren (S302) einer Anforderung zur Aushandlung der Fähigkeiten für ein Endgerät (User Equipment) durch eine sekundär dienende Basisstation an eine als Master dienende Basisstation gemäß einer Anforderung zur lokalen Konfigurationsanforderung einer sekundären Zellgruppe (Secondary Cell Group), SCG-Konfigurationsanforderung, wobei die Anforderung zur Aushandlung von Fähigkeiten für das Endgerät zum Aushandeln über eine besondere Fähigkeit für das Endgerät auf einer Seite der sekundären Zellgruppe verwendet wird; und
ein Empfangen (S304), durch die sekundär dienende Basisstation, einer Antwort auf die Aushandlung der Fähigkeiten für das Endgerät, die von der als Master dienenden Basisstation als Antwort auf die Anforderung zur Aushandlung der Fähigkeiten für das Endgerät zurückgegeben wird;
**dadurch gekennzeichnet, dass**
die Anforderung zur Aushandlung der Fähigkeiten für das Endgerät umfasst: einen angeforderten absoluten oder relativen Betrag der besonderen Fähigkeit für das Endgerät, eine Ursache für die Anforderung der besonderen Fähigkeit für das Endgerät, in einem Fall, in dem die Anforderung für die besondere Fähigkeit für das Endgerät von der als Master dienenden Basisstation abgelehnt wird, ob die sekundär dienende Basisstation bereit ist, einen vorgeschlagenen Wert der besonderen Fähigkeit für das Endgerät von der als Master dienenden Basisstation zu akzeptieren, und einen aktuellen Betrag eines tatsächlichen Verbrauches / Belegung einer besonderen Fähigkeit für das Endgerät;
dass, wenn die sekundär dienende Basisstation bereit ist, den vorgeschlagenen Wert der besonderen Fähigkeit für das Endgerät von der als Master dienenden Basisstation zu akzeptieren, die sekundär dienende Basisstation einen vorgeschlagenen Wert empfängt, der sich von dem Wert des angeforderten absoluten oder relativen Betrags der besonderen Fähigkeit für das Endgerät unterscheidet, der von der als Master dienenden Basisstation auf der Grundlage des angeforderten absoluten oder relativen Betrags der besonderen Fähigkeit für das Endgerät und der Ursache der Anforderung der besonderen Fähigkeit für das Endgerät gegeben wird, wobei der vorgeschlagene Wert, der sich von dem Wert des angeforderten absoluten oder relativen Betrags der besonderen Fähigkeit für das Endgerät unterscheidet, in der Antwort auf die Aushandlung von Fähigkeiten für das Endgerät enthalten ist; und
dass, wenn die sekundär dienende Basisstation nicht bereit ist, den vorgeschlagenen Wert der besonderen Fähigkeit für das Endgerät von der als Master dienenden Basisstation zu akzeptieren, die sekundär dienende Basisstation ein Entscheidungsergebnis empfängt, ob dem angeforderten absoluten oder relativen Betrag der besonderen Fähigkeit für das Endgerät zugestimmt wird, das von der als Master dienenden Basisstation auf der Grundlage des angeforderten absoluten oder relativen Betrags der besonderen Fähigkeit für das Endgerät und der Ursache des Anforderns der besonderen Fähigkeit für das Endgerät gegeben wird, wobei das Entscheidungsergebnis in der Antwort auf die Aushandlung der Fähigkeiten für das Endgerät enthalten ist.

2. Verfahren nach Anspruch 1, wobei die besondere Fähigkeit für das Endgerät mindestens eines der folgenden Merkmale umfasst:
eine Frequenzbandfähigkeit, die von einem Endgerät unterstützt wird, oder eine Frequenzband-Kombinationsfähigkeit, die von dem Endgerät unterstützt wird;
eine Fähigkeit des Endgeräts, eine maximale Anzahl von Trägern und eine gesamte spektrale Bandbreite zu aggregieren;
eine maximale Anzahl von Transportblöcken, TBs, die das Endgerät in jedem Übertragungszeitintervall, TTI, übertragen kann;
eine Protokollpuffergröße für Luftschnittstellen für eine Benutzerebene-Schicht-2, L2, des Endgeräts; oder
eine ganze Anzahl von Soft-Kanal-Bits für Luftschnittstellen für eine physikalische Schicht des Endgeräts.

3. Verfahren nach Anspruch 1, wobei das Initiieren der Anforderung zur Aushandlung der Fähigkeiten für das Endgerät an die als Master dienende Basisstation durch die sekundäre dienende Basisstation gemäß der Anforderung zur lokalen Konfigurationsanforderung der sekundären Zellgruppe umfasst:
ein Initiieren der Anforderung zur Aushandlung der Fähigkeiten für das Endgerät an die als Master dienende Basisstation durch die sekundäre dienende Basisstation über eine Prozessnachricht zum Xn-Application-Protocol, XnAP, gemäß der lokalen Konfigurationsanforderung der sekundären Zellgruppe.

4. Verfahren nach Anspruch 1, wobei nach dem Empfangen, durch die sekundär dienende Basisstation, die Antwort auf die Aushandlung der Fähigkeiten für das Endgerät, die von der als Master dienenden Basisstation als Antwort auf die Anforderung zur Aushandlung der Fähigkeiten für das Endgerät zurückgesendet wird, das Verfahren weiterhin umfasst:
ein Analysieren der Antwort auf die Aushandlung der Fähigkeiten für das Endgerät durch die sekundäre dienende Basisstation, um ein Verhandlungsergebnis der besonderen Fähigkeit für das Endgerät zu bestimmen.

5. Verfahren nach Anspruch 4, wobei das Verhandlungsergebnis mindestens eines der folgenden umfasst:
ob die als Master dienende Basisstation zustimmt, den absoluten oder relativen Betrag der von der sekundären dienenden Basisstation angeforderten besonderen Fähigkeit für das Endgerät zuzuweisen;
ob die als Master dienende Basisstation einen vorgeschlagenen Wert für die besondere Fähigkeit für das Endgerät und einen spezifischen Inhalt des vorgeschlagenen Wertes zuweist;
ob die Neuzuweisung der besonderen Fähigkeit für das Endgerät eine Konfiguration und einen Datenfunkträger-Betriebszustand einer Seite einer Master-Cell-Gruppe, MCG, beeinflusst; oder
eine Ursache für die Ablehnung der Anforderung von der sekundären dienenden Basisstation für die besondere Fähigkeit für das Endgerät.

6. Verfahren zur Aushandlung von Fähigkeiten für Endgeräte, welches umfasst:
in einem Fall einer mehrfachen Verbindung, das ein Netzwerk langfristiger Entwicklung, LTE-Netz, (Long Term Evolution) und ein Netzwerk neuen Funks, NR-Netz, (New Radio) aufweist, ein Empfangen (S402) einer von einer sekundär dienenden Basisstation gesendeten Anforderung zur Aushandlung der Fähigkeiten für ein Endgerät (User Equipment) durch eine als Master dienende Basisstation, wobei die Anforderung zur Aushandlung der Fähigkeiten für das Endgerät zum Aushandeln über eine besondere Fähigkeit für das Endgerät auf einer Seite der sekundären Zellgruppe (Secondary Cell Group) verwendet wird; und
ein Erfassen (S404) von Informationen über die besondere Fähigkeit für das Endgerät durch die als Master dienende Basisstation und ein Zurückführen einer Antwort auf die Aushandlung der Fähigkeiten für das Endgerät als Antwort auf die Anforderung zur Aushandlung der Fähigkeiten für das Endgerät an die sekundär dienende Basisstation;
**dadurch gekennzeichnet, dass**,
die Anforderung zur Aushandlung der Fähigkeiten für das Endgerät umfasst: einen angeforderten absoluten oder relativen Betrag der besonderen Fähigkeit für das Endgerät, eine Ursache für die Anforderung der besonderen Fähigkeit für das Endgerät, in einem Fall, in dem eine Anforderung für die besondere Fähigkeit für das Endgerät von der als Master dienenden Basisstation zurückgewiesen wird, ob die sekundär dienende Basisstation bereit ist, einen vorgeschlagenen Wert der besonderen Fähigkeit für das Endgerät von der als Master dienenden Basisstation zu akzeptieren, und einen aktuellen Betrag eines tatsächlichen Verbrauches / Belegung einer besonderen Fähigkeit für das Endgerät;
dass, wenn die sekundär versorgende Basisstation bereit ist, den vorgeschlagenen Wert der besonderen Fähigkeit für das Endgerät von der als Master dienenden Basisstation zu akzeptieren, die als Master dienende Basisstation einen vorgeschlagenen Wert gibt, der sich von dem Wert des angeforderten absoluten oder relativen Betrags der besonderen Fähigkeit für das Endgerät unterscheidet, auf der Grundlage des angeforderten absoluten oder relativen Betrags der besonderen Fähigkeit für das Endgerät und der Ursache der Anforderung der besonderen Fähigkeit für das Endgerät, wobei der vorgeschlagene Wert, der sich von dem Wert des angeforderten absoluten oder relativen Betrags der besonderen Fähigkeit für das Endgerät unterscheidet, in der Antwort auf die Aushandlung der Fähigkeiten für das Endgerät enthalten ist;
dass, wenn die sekundäre dienende Basisstation nicht bereit ist, den vorgeschlagenen Wert der besonderen Fähigkeit für das Endgerät von der als Master dienenden Basisstation zu akzeptieren, die als Master dienende Basisstation ein Entscheidungsergebnis gibt, ob dem angeforderten absoluten oder relativen Betrag der besonderen Fähigkeit für das Endgerät zugestimmt wird, auf der Grundlage des angeforderten absoluten oder relativen Betrags der besonderen Fähigkeit für das Endgerät und der Ursache des Anforderns der besonderen Fähigkeit für das Endgerät, wobei das Entscheidungsergebnis in der Antwort auf die Aushandlung der Fähigkeiten für das Endgerät enthalten ist.

7. Verfahren nach Anspruch 6, wobei die besondere Fähigkeit des Endgeräts mindestens eines der folgenden Merkmale umfasst:
eine Frequenzbandfähigkeit, die von einem Endgerät unterstützt wird, oder eine Frequenzband-Kombinationsfähigkeit, die von dem Endgerät unterstützt wird;
eine Fähigkeit des Endgeräts, eine maximale Anzahl von Trägern und eine gesamte spektrale Bandbreite zu aggregieren;
eine maximale Anzahl von Transportblöcken, TBs, die das Endgerät in jedem Übertragungszeitintervall, TTI, übertragen kann;
eine Protokollpuffergröße für Luftschnittstellen für eine Benutzerebene-Schicht-2, L2, des Endgeräts; oder
eine ganze Anzahl von Soft-Kanal-Bits für Luftschnittstellen für eine physikalische Schicht des Endgeräts.

8. Verfahren nach Anspruch 6, wobei die Antwort auf die Aushandlung der Fähigkeiten für das Endgerät ferner mindestens eines der folgenden Elemente umfasst:
ob die Zuweisung der besonderen Fähigkeit für das Endgerät durch die als Master dienende Basisstation eine aktuelle Konfiguration und eine Seite eines Datenfunkträger-Betriebszustands einer Master-Cell-Gruppe, MCG, beeinflusst; oder
einen Wert für die Ablehnungsursache in einem Fall, in dem die Anfrage für die besondere Fähigkeit für das Endgerät von der als Master dienenden Basisstation abgelehnt wird.

9. Vorrichtung zur Aushandlung von Fähigkeiten für Endgeräte für eine sekundär dienende Basisstation, wobei die Vorrichtung zur Aushandlung der Fähigkeiten für Endgeräte aufweist:
ein Initiierungsmodul (50), das so ausgestaltet ist, dass es eine Anforderung zur Aushandlung der Fähigkeiten für ein Endgerät (User Equipment) an eine als Master dienende Basisstation gemäß einer Anforderung zur lokalen Konfigurationsanforderung einer sekundären Zellgruppe (Secondary Cell Group), SCG-Konfigurationsanforderung in einem Fall einer mehrfachen Verbindung initiiert, das ein Netzwerk langfristiger Entwicklung, LTE-Netz, (Long Term Evolution) und ein Netzwerk neuen Funks, NR-Netz, (New Radio) aufweist, wobei die Anforderung zur Aushandlung von Fähigkeiten für das Endgerät zum Aushandeln über eine bestimmte Fähigkeit für das Endgerät auf einer Seite der sekundären Zellgruppe verwendet wird; und
ein Empfangsmodul (52), das ausgestaltet ist, um eine Antwort auf die Aushandlung der Fähigkeiten für das Endgerät zu empfangen, die von der als Master dienenden Basisstation als Antwort auf die Anforderung zur Aushandlung der Fähigkeiten für das Endgerät zurückgesendet worden ist;
**dadurch gekennzeichnet, dass**,
die Anforderung zur Aushandlung der Fähigkeiten für das Endgerät umfasst: einen angeforderten absoluten oder relativen Betrag der besonderen Fähigkeit für das Endgerät, einen Grund für die Anforderung der besonderen Fähigkeit für das Endgerät, in einem Fall, in dem eine Anforderung für die besonderen Fähigkeit für das Endgerät von der als Master dienenden Basisstation abgelehnt wird, ob die sekundär dienende Basisstation bereit ist, einen vorgeschlagenen Wert der besonderen Fähigkeit für das Endgerät von der als Master dienenden Basisstation zu akzeptieren, und einen aktuellen Betrag eines tatsächlichen Verbrauchs / Belegung einer besonderen Fähigkeit für das Endgerät;
dass, wenn die sekundär dienende Basisstation bereit ist, den vorgeschlagenen Wert der besonderen Fähigkeit für das Endgerät von der als Master dienenden Basisstation zu akzeptieren, das Empfangsmodul (52) ferner ausgestaltet ist, um einen vorgeschlagenen Wert zu empfangen, der sich von dem Wert des angeforderten absoluten oder relativen Betrags der besonderen Fähigkeit für das Endgerät unterscheidet, der von der als Master dienenden Basisstation auf der Grundlage des angeforderten absoluten oder relativen Betrags der besonderen Fähigkeit für das Endgerät und der Ursache des Anforderns der besonderen Fähigkeit für das Endgerät gegeben wird, wobei der vorgeschlagene Wert, der sich von dem Wert des angeforderten absoluten oder relativen Betrags der besonderen Fähigkeit für das Endgerät unterscheidet, in der Antwort auf die Aushandlung der Fähigkeiten für das Endgerät enthalten ist; und
dass, wenn die sekundäre dienende Basisstation nicht bereit ist, den vorgeschlagenen Wert der besonderen Fähigkeit für das Endgerät von der als Master dienenden Basisstation zu akzeptieren, das Empfangsmodul (52) weiter ausgestaltet ist, um ein Entscheidungsergebnis zu empfangen, ob dem angeforderten absoluten oder relativen Betrag der besonderen Fähigkeit für das Endgerät zugestimmt worden ist, das von der als Master dienenden Basisstation auf der Grundlage des angeforderten absoluten oder relativen Betrags der besonderen Fähigkeit für das Endgerät und der Ursache der Anforderung der besonderen Fähigkeit für das Endgerät gegeben worden ist, wobei das Entscheidungsergebnis in der Antwort auf die Aushandlung der Fähigkeiten für das Endgerät enthalten ist.

10. Vorrichtung zur Aushandlung von Fähigkeiten für Endgeräte für eine als Master dienende Basisstation, wobei die Vorrichtung zur Aushandlung der Fähigkeiten der Endgeräte aufweist:
ein Empfangsmodul (60), das so ausgestaltet ist, dass es eine Anforderung zur Aushandlung der Fähigkeiten für ein Endgerät (User Equipment) empfängt, die von einer sekundär dienenden Basisstation in einem Fall einer mehrfachen Verbindung gesendet worden, das ein Netzwerk langfristiger Entwicklung, LTE-Netz, (Long Term Evolution) und ein Netzwerk neuen Funks, NR-Netz, (New Radio) aufweist, wobei die Anforderung zur Aushandlung von Fähigkeiten für das Endgerät zum Aushandeln über eine bestimmte Fähigkeit für das Endgerät auf einer Seite der sekundären Zellgruppe (SCG) verwendet wird; und
ein Verarbeitungsmodul (62), das so ausgestaltet ist, dass es Informationen über die besondere Fähigkeit für das Endgerät erfasst und als Antwort auf die Anforderung zur Aushandlung der Fähigkeiten für das Endgerät eine Antwort auf die Anforderung zur Aushandlung der Fähigkeiten für das Endgerät an die sekundäre dienende Basisstation zurückleitet;
**dadurch gekennzeichnet, dass**,
die Anforderung zur Aushandlung der Fähigkeiten für das Endgerät umfasst: einen angeforderten absoluten oder relativen Betrag der besonderen Fähigkeit für das Endgerät, eine Ursache für die Anforderung der besonderen Fähigkeit für das Endgerät, in einem Fall, in dem eine Anforderung für die besonderen Fähigkeit für das Endgerät von der als Master dienenden Basisstation abgelehnt wird, ob die sekundär dienende Basisstation bereit ist, einen vorgeschlagenen Wert der besonderen Fähigkeit für das Endgerät von der als Master dienenden Basisstation zu akzeptieren, und einen aktuellen tatsächlichen Verbrauch/Belegungsbetrag einer besonderen Fähigkeit für das Endgerät;
dass, wenn die sekundär dienende Basisstation bereit ist, den vorgeschlagenen Wert der besonderen Fähigkeit für das Endgerät von der als Master dienenden Basisstation zu akzeptieren, das Verarbeitungsmodul (62) ferner ausgestaltet ist, um den vorgeschlagenen Wert, der sich von dem Wert des angeforderten absoluten oder relativen Betrags der besonderen Fähigkeit für das Endgerät unterscheidet, auf der Grundlage des angeforderten absoluten oder relativen Betrags der besonderen Fähigkeit für das Endgerät und der Ursache des Anforderns der besonderen Fähigkeit für das Endgerät zu geben, wobei der vorgeschlagene Wert, der sich von dem Wert des angeforderten absoluten oder relativen Betrags der besonderen Fähigkeit für das Endgerät unterscheidet, in der Antwort auf die Aushandlung der Fähigkeiten für das Endgerät enthalten ist;
dass, wenn die sekundäre dienende Basisstation nicht bereit ist, den vorgeschlagenen Wert der besonderen Fähigkeit für das Endgerät von der als Master dienenden Basisstation zu akzeptieren, das Verarbeitungsmodul (62) ferner ausgestaltet ist, um ein Entscheidungsergebnis zu geben, ob dem angeforderten absoluten oder relativen Betrag der besonderen Fähigkeit für das Endgerät zugestimmt worden ist, auf der Grundlage des angeforderten absoluten oder relativen Betrags der besonderen Fähigkeit für das Endgerät und der Ursache der Anforderung der besonderen Fähigkeit für das Endgerät, wobei das Entscheidungsergebnis in der Antwort auf die Aushandlung der Fähigkeiten für das Endgerät enthalten ist.

11. Speichermedium, das so ausgestaltet ist, dass es einen Programmcode speichert, der, wenn er von Vorrichtung zur Aushandlung von Fähigkeiten für Endgeräte für eine sekundär dienende Basisstation bzw. einem Computer einer Vorrichtung zur Aushandlung von Fähigkeiten für Endgeräte für eine als Master dienende Basisstation ausgeführt wird, die entsprechende Vorrichtung veranlasst, das Verfahren nach einem der Ansprüche 1 bis 5 bzw. 6 bis 8 durchzuführen.

## Revendications

1. Procédé de négociation de capacité de terminal, comprenant :
dans un environnement à connexions multiples comprenant un réseau d'évolution à long terme, LTE, et un réseau New Radio, NR, l'initiation (S302), par une station de base de desserte secondaire, d'une requête de négociation de capacité d'équipement utilisateur, UE, à une station de base de desserte maître, selon une exigence de configuration de groupe de cellules secondaire, SCG, local, dans lequel la requête de négociation de capacité d'UE est utilisée pour négocier une capacité spécifique d'UE côté SCG ; et
la réception (S304) par la station de base de desserte secondaire d'une réponse de négociation de capacité d'UE renvoyée par la station de base de desserte maître en réponse à la requête de négociation de capacité d'UE ;
**caractérisé en ce que**,
la requête de négociation de capacité d'UE comprend : une quantité requise, absolue ou relative, de la capacité spécifique d'UE, une raison pour requérir la capacité spécifique d'UE, une information sur l'acceptation ou non par la station de base de desserte secondaire d'une valeur suggérée de la capacité spécifique d'UE de la part de la station de base de desserte maître dans le cas d'un rejet, par la station de base de desserte maître, d'une requête pour la capacité spécifique d'UE , et une quantité de consommation/occupation courante réelle d'une capacité spécifique d'UE ;
lorsque la station de base de desserte secondaire est d'accord pour accepter la valeur suggérée de la capacité spécifique d'UE de la part de la station de base de desserte maître, la station de base de desserte secondaire reçoit une valeur suggérée différente de la valeur de la quantité requise, absolue ou relative, de la capacité spécifique d'UE, qui est donnée par la station de base de desserte maître sur la base de la quantité requise, absolue ou relative, de la capacité spécifique d'UE et la raison pour requérir la capacité spécifique d'UE, dans lequel la valeur suggérée différente de la valeur de la quantité requise, absolue ou relative, de la capacité spécifique d'UE, est comprise dans la réponse de négociation de capacité d'UE ; et
lorsque la station de base de desserte secondaire n'est pas d'accord pour accepter la valeur suggérée de la capacité spécifique d'UE de la part de la station de base de desserte maître, la station de base de desserte secondaire reçoit un résultat de décision statuant sur l'acceptation ou non de la quantité requise, absolue ou relative, de la capacité spécifique d'UE, qui est donné par la station de base de desserte maître sur la base de la quantité requise, absolue ou relative, de la capacité spécifique d'UE et la raison pour requérir la capacité spécifique d'UE, dans lequel le résultat de décision est compris dans la réponse de négociation de capacité d'UE.

2. Procédé selon la revendication 1, dans lequel la capacité spécifique d'UE comprend au moins l'un des éléments suivants :
une capacité de bande de fréquences prise en charge par un UE ou une capacité de combinaison de bandes de fréquences prise en charge par l'UE ; une compétence de l'UE à agréger un nombre maximal de porteuses et une largeur de bande spectrale totale ; un nombre maximal de blocs de transport, TB, que l'UE est apte à transmettre dans chaque intervalle de temps de transmission, TTI ; une taille de tampon de protocole de couche 2, L2, de plan utilisateur de l'interface radio d'UE ; ou un nombre total de bits de canal logiciel de couche physique d'interface radio d'UE.

3. Procédé selon la revendication 1, dans lequel l'initiation, par la station de base de desserte secondaire, de la requête de négociation de capacité d'UE à la station de base de desserte maître, selon l'exigence de configuration de SCG local comprend :
l'initiation, par la station de base de desserte secondaire, de la requête de négociation de capacité d'UE à la station de base de desserte maître par l'intermédiaire d'un message de processus de protocole d'application Xn, XnAp, selon l'exigence de configuration de SCG local.

4. Procédé selon la revendication 1, dans lequel après la réception, par la station de base de desserte secondaire, de la réponse de négociation de capacité d'UE renvoyée par la station de base de desserte maître en réponse à la requête de négociation de capacité d'UE, le procédé comprend en outre :
l'analyse, par la station de base de desserte secondaire, de la réponse de négociation de capacité d'UE afin de déterminer un résultat de négociation de la capacité spécifique d'UE.

5. Procédé selon la revendication 4, dans lequel le résultat de négociation comprend au moins l'un des éléments suivants :
si la station de base de desserte maître accepte d'attribuer la quantité, absolue ou relative, de la capacité spécifique d'UE requise par la station de base de desserte secondaire ;
si la station de base de desserte maître attribue une valeur suggérée pour la capacité spécifique d'UE et un contenu de valeur suggérée spécifique ;
si la réattribution de la capacité spécifique d'UE influence une configuration et une condition de fonctionnement de support radio de données côté groupe de cellules maître, MCG ; ou
une raison pour rejeter la requête de la station de base de desserte secondaire pour la capacité spécifique d'UE.

6. Procédé de négociation de capacité de terminal, comprenant :
dans un environnement à connexions multiples comprenant un réseau d'évolution à long terme, LTE, et un réseau New Radio, NR, la réception (S402), par une station de base de desserte maître, d'une requête de négociation de capacité d'équipement utilisateur, UE, envoyée par une station de base de desserte secondaire, dans lequel la requête de négociation de capacité d'UE est utilisée pour négocier une capacité spécifique d'UE côté groupe de cellules secondaire, SCG ; et
l'acquisition (S404), par la station de base de desserte maître, d'informations sur la capacité spécifique d'UE et le renvoi à la station de base de desserte secondaire d'une réponse de négociation de capacité d'UE en réponse à la requête de négociation de capacité d'UE ;
**caractérisé en ce que**,
la requête de négociation de capacité d'UE comprend : une quantité requise, absolue ou relative, de la capacité spécifique d'UE, une raison pour requérir la capacité spécifique d'UE, une information sur l'acceptation ou non par la station de base de desserte secondaire d'une valeur suggérée de la capacité spécifique d'UE de la part de la station de base de desserte maître dans le cas où une requête pour la capacité spécifique d'UE est rejetée par la station de base de desserte maître, et une quantité de consommation/occupation courante réelle d'une capacité spécifique d'UE ;
lorsque la station de base de desserte secondaire est d'accord pour accepter la valeur suggérée de la capacité spécifique d'UE de la part de la station de base de desserte maître, la station de base de desserte maître donne une valeur suggérée différente de la valeur de la quantité requise, absolue ou relative, de la capacité spécifique d'UE, sur la base de la quantité requise, absolue ou relative, de la capacité spécifique d'UE et la raison pour requérir la capacité spécifique d'UE, dans lequel la valeur suggérée différente de la valeur de la quantité requise, absolue ou relative, de la capacité spécifique d'UE, est comprise dans la réponse de négociation de capacité d'UE ;
lorsque la station de base de desserte secondaire n'est pas d'accord pour accepter la valeur suggérée de la capacité spécifique d'UE de la part de la station de base de desserte maître, la station de base de desserte maître donne un résultat de décision statuant sur l'acceptation ou non de la quantité requise, absolue ou relative, de la capacité spécifique d'UE, sur la base de la quantité requise, absolue ou relative, de la capacité spécifique d'UE et la raison pour requérir la capacité spécifique d'UE, dans lequel le résultat de décision est compris dans la réponse de négociation de capacité d'UE.

7. Procédé selon la revendication 6, dans lequel la capacité spécifique d'UE comprend au moins l'un des éléments suivants :
une capacité de bande de fréquences prise en charge par un UE ou une capacité de combinaison de bandes de fréquences prise en charge par l'UE ; une compétence de l'UE à agréger un nombre maximal de porteuses et une largeur de bande spectrale totale ; un nombre maximal de blocs de transport, TB, que l'UE est apte à transmettre dans chaque intervalle de temps de transmission, TTI ; une taille de tampon de protocole de couche 2, L2, de plan utilisateur de l'interface radio d'UE ; ou un nombre total de bits de canal souple de couche physique de l'interface radio d'UE.

8. Procédé selon la revendication 6, dans lequel la réponse de négociation de capacité d'UE comprend en outre au moins l'un des éléments suivants :
si l'attribution de la capacité spécifique d'UE par la station de base de desserte maître influence une configuration courante et une condition de fonctionnement de support radio de données côté groupe de cellules maître, MCG ; ou
une valeur de cause de rejet dans le cas où la requête de capacité spécifique d'UE est rejetée par la station de base de desserte maître.

9. Appareil de négociation de capacité de terminal pour une station de base de desserte secondaire, l'appareil de négociation de capacité de terminal comprenant :
un module d'initiation (50) qui est configuré pour initier une requête de négociation de capacité d'équipement utilisateur, UE, à une station de base de desserte maître selon une exigence de configuration de groupe de cellules secondaire, SCG, local, dans un environnement à connexions multiples comprenant un réseau d'évolution à long terme, LTE, et un réseau New Radio, NR, dans lequel la requête de négociation de capacité d'UE est utilisée pour négocier une capacité spécifique d'UE côté SCG ; et
un module de réception (52) qui est configuré pour recevoir une réponse de négociation de capacité d'UE renvoyée par la station de base de desserte maître en réponse à la requête de négociation de capacité d'UE ;
**caractérisé en ce que**,
la requête de négociation de capacité d'UE comprend : une quantité requise, absolue ou relative, de la capacité spécifique d'UE, une raison pour requérir la capacité spécifique d'UE, l'information sur l'acceptation ou non par la station de base de desserte secondaire d'une valeur suggérée de la capacité spécifique d'UE de la part de la station de base de desserte maître dans le cas où une requête pour la capacité spécifique d'UE est rejetée par la station de base de desserte maître, et une quantité de consommation/occupation courante réelle d'une capacité spécifique d'UE ;
lorsque la station de base de desserte secondaire est d'accord pour accepter la valeur suggérée de la capacité spécifique d'UE de la part de la station de base de desserte maître, le module de réception (52) est en outre configuré pour recevoir une valeur suggérée différente de la valeur de la quantité requise, absolue ou relative, de la capacité spécifique d'UE, qui est donnée par la station de base de desserte maître sur la base de la quantité requise, absolue ou relative, de la capacité spécifique d'UE et la raison pour requérir la capacité spécifique d'UE, dans lequel la valeur suggérée différente de la valeur de la quantité requise, absolue ou relative, de la capacité spécifique d'UE, est comprise dans la réponse de négociation de capacité d'UE ; et
lorsque la station de base de desserte secondaire n'est pas d'accord pour accepter la valeur suggérée de la capacité spécifique d'UE de la part de la station de base de desserte maître, le module de réception (52) est en outre configuré pour recevoir un résultat de décision statuant sur l'acceptation ou non de la quantité requise, absolue ou relative, de la capacité spécifique d'UE, qui est donné par la station de base de desserte maître sur la base de la quantité requise, absolue ou relative, de la capacité spécifique d'UE et la raison pour requérir la capacité spécifique d'UE, dans lequel le résultat de décision est compris dans la réponse de négociation de capacité d'UE.

10. Appareil de négociation de capacité de terminal pour une station de base de desserte maître, l'appareil de négociation de capacité de terminal comprenant :
un module de réception (60) qui est configuré pour recevoir une requête de négociation de capacité d'équipement utilisateur, UE, envoyée par une station de base de desserte secondaire dans un environnement à connexions multiples comprenant un réseau d'évolution à long terme, LTE, et un réseau New Radio, NR, dans lequel la requête de négociation de capacité d'UE est utilisée pour négocier une capacité spécifique d'UE côté groupe de cellules secondaire, SCG ; et
un module de traitement (62) qui est configuré pour acquérir des informations sur la capacité spécifique d'UE et renvoyer à la station de base de desserte secondaire une réponse de négociation de capacité d'UE en réponse à la requête de négociation de capacité d'UE ;
**caractérisé en ce que**,
la requête de négociation de capacité d'UE comprend : une quantité requise, absolue ou relative, de la capacité spécifique d'UE, une raison pour requérir la capacité spécifique d'UE, l'information sur l'acceptation ou non par la station de base de desserte secondaire d'une valeur suggérée de la capacité spécifique d'UE de la part de la station de base de desserte maître dans le cas où une requête pour la capacité spécifique d'UE est rejetée par la station de base de desserte maître, et une quantité de consommation/occupation courante réelle d'une capacité spécifique d'UE ;
lorsque la station de base de desserte secondaire est d'accord pour accepter la valeur suggérée de la capacité spécifique d'UE de la part de la station de base de desserte maître, le module de traitement (62) est en outre configuré pour donner la valeur suggérée différente de la valeur de la quantité requise, absolue ou relative, de la capacité spécifique d'UE, sur la base de la quantité requise, absolue ou relative, de la capacité spécifique d'UE et la raison pour requérir la capacité spécifique d'UE, dans lequel la valeur suggérée différente de la valeur de la quantité requise, absolue ou relative, de la capacité spécifique d'UE, est comprise dans la réponse de négociation de capacité d'UE ;
lorsque la station de base de desserte secondaire n'est pas d'accord pour accepter la valeur suggérée de la capacité spécifique d'UE de la part de la station de base de desserte maître, le module de traitement (62) est en outre configuré pour donner un résultat de décision statuant sur l'acceptation ou non de la quantité requise, absolue ou relative, de la capacité spécifique d'UE, sur la base de la quantité requise, absolue ou relative, de la capacité spécifique d'UE et la raison pour requérir la capacité spécifique d'UE, dans lequel le résultat de décision est compris dans la réponse de négociation de capacité d'UE.

11. Support de stockage qui est configuré pour stocker un code de programme qui, lorsqu'il est exécuté par un ordinateur d'un appareil de négociation de capacité de terminal d'une station de base de desserte secondaire, ou par un ordinateur d'un appareil de négociation de capacité de terminal d'une station de base de desserte maître, respectivement, entraîne l'appareil correspondant à implémenter le procédé selon l'une quelconque des revendications 1 à 5 ou 6 à 8, respectivement.
